# EUROPEAN PATENT SPECIFICATION

(11) **EP 3 481 669 B1**
(45) Date of publication and mention of the grant of the patent: **05.08.2020**
(21) Application number: 17740789.7
(22) Date of filing: 26.06.2017
(51) Int. Cl.: B60N 2/28

(54) **IMPROVED DEVICE FOR TRANSPORTING BABIES IN CARS**
VERBESSERTE VORRICHTUNG ZUM TRANSPORT VON KLEINKINDERN IN AUTOS
DISPOSITIF AMÉLIORÉ POUR LE TRANSPORT DE BÉBÉS DANS DES VOITURES

(30) Priority: 06.07.2016 IT 201600070555
(43) Date of publication of application: 15.05.2019
(73) Proprietor: L'Inglesina Baby S.p.A., 36077 Altavilla Vicentina (VI) (IT)
(72) Inventor: GORZA, Roberto, 32034 Pedavena (BL) (IT); TOMASI, Ivan, 36051 Creazzo (VI) (IT); SCALDAFERRO, Dario, 36030 Costabissara (VI) (IT); DAL MASO, Paolo, 36071 Arzignano (VI) (IT)
(74) Representative: Bonini, Ercole
(86) International application number: PCT/IB2017/053807
(87) International publication number: WO 2018/007896

(56) References cited:
- EP-A1- 1 731 355
- EP-A2- 0 703 113
- WO-A1-2015/151181

## Description

The invention concerns an improved device suited to be used to transport babies in cars.

As is known, baby car seats of various types are available on the market, which are used to transport babies in cars in total safety.

A known type of baby car seat requires the use of belts which are needed to fix it to the car seat, but the use of this type of seats tends to be abandoned due to the difficulties encountered by the user who has to cross the fastening belts correctly and above all due to the serious inconveniences which can derive from the instability of the baby seat if the belts are not constrained to the car seat according to the instructions provided for the use of the baby seat.

Baby car seats with fastening belts thus tend to be replaced by transporting devices designed according to new concepts, which comprise a base that is fixed to the car seat, to which a baby seat is connected in a stable but removable manner.

Suitable handles are provided which are at the disposal of the user of the transporting device and which make it possible to release the baby seat from the base easily and quickly, even with the baby still seated in it, at the end of the trip.

The critical aspect of the devices of this type is constituted by the coupling mechanism between the base and the baby seat, not only because of the load and stress that may be generated and that in case of impact may separate the baby seat from the base, but also because of the errors which may be made during the coupling operation, for example in the case where one or more hooks of the base are not engaged with the corresponding coupling elements provided on the baby car seat.

The devices are generally provided with safety means which are designed to avoid or reduce the risk of the baby seat becoming detached from the base, however these safety means have often proved to be scarcely efficient.

It is thus the object of the invention to provide a device for transporting babies in cars which, compared to the known devices, offers more safety against the unintentional disconnection of the coupling means.

It is another object of the present invention to provide a device which offers more safety against the risk of incorrect coupling of the baby car seat to the base.

The objects illustrated above are achieved by a device carried out according to the main claim, to which reference is made.

The dependent claims describe other characteristics of the device that is the subject of the invention.

Advantageously, in the device that is the subject of the invention the safety means suited to prevent the unintentional disconnection of the hooks that fix the baby seat to the base are interposed between the mutually sliding elements that open and close the hooks, in such a way as to make said mutually sliding elements mutually fixed once the hooks have been engaged. Still advantageously, the configuration of said safety means is such that they intervene in an active manner when the baby car seat is disconnected from the base.

Furthermore, advantageously, the configuration of the coupling means is such as to prevent the baby seat from being coupled to the base in an incorrect manner.

In this way, advantageously, the device that is the subject of the invention is more resistant to the dynamic stress which is generated in case of impact and safer compared to the devices of the known art.

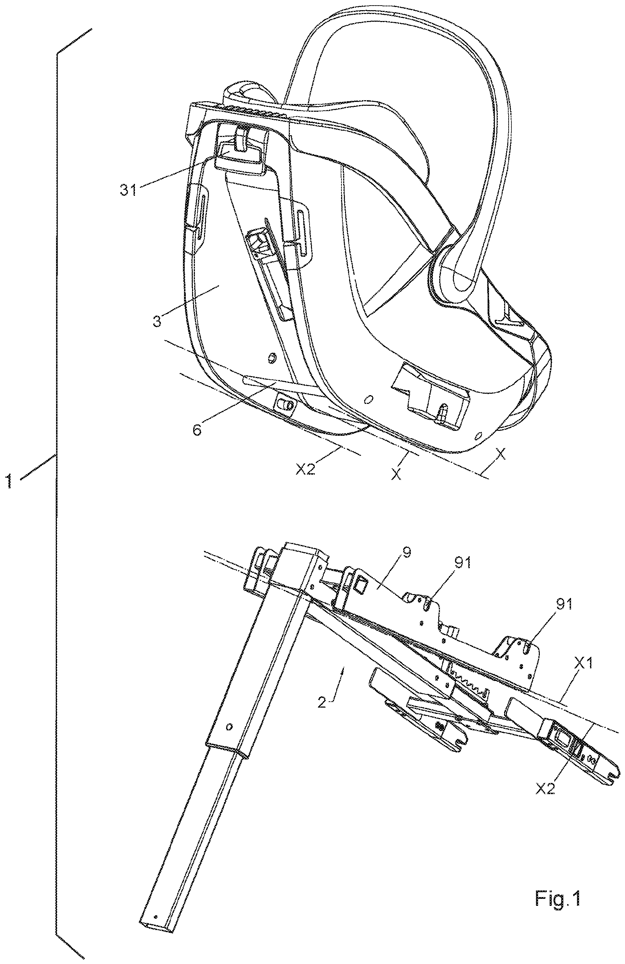

The objects and the advantages listed above are achieved by the device that is the subject of the invention, a description of which is provided here below by way of example, making reference to the attached drawings, in which:
- Figure 1 shows an exploded axonometric view of the device that is the subject of the invention;
- Figure 2 shows part of Figure 1;
- Figures from 3 to 10 show different sectional views of the device of Figure 1, each one of which represents a different condition of the coupling means that connect the baby seat to the base and is carried out according to the same vertical plane passing through the same longitudinal axis along which two of the coupling means are aligned.

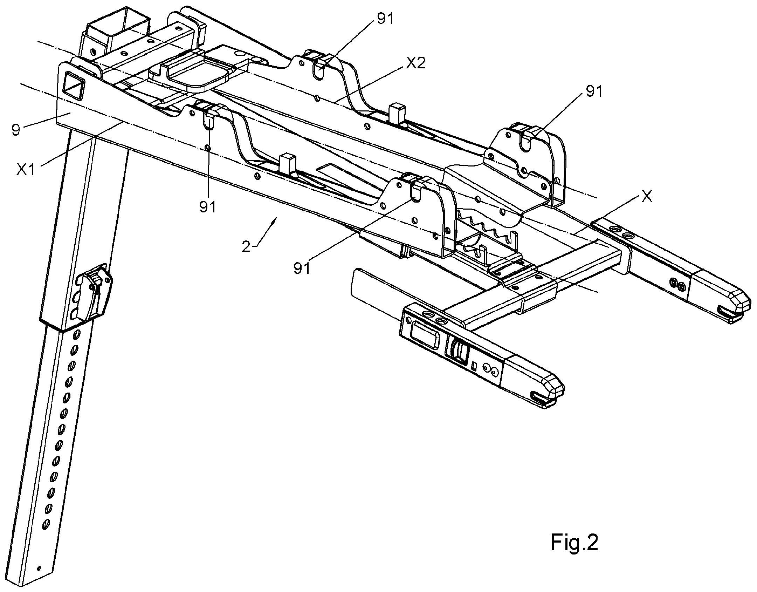

The device of the invention is shown in the axonometric views of Figures 1 and 2, where it is indicated as a whole by **1.**

It should be noted that it has a longitudinal axis of symmetry **X** with respect to which the means for coupling the baby car seat **3** with the base **2** are aligned according to two directions **X1** and **X2** which are parallel to each other and to said longitudinal axis **X,** wherein said base is fixed to the car seat in a stable manner.

The device **1** is then described here below with reference to Figures from 3 to 10, which show a corresponding number of sectional views of said device, wherein said views are symmetric to each other with respect to the longitudinal axis **X** and each one of them is carried out according to one of said directions **X1** or **X2,** for example according to the direction **X1.**

With reference to the figures, it can be observed that the device **1** comprises coupling/releasing means **4** suited to couple/release the baby car seat **3** with/ from the base **2,** wherein said coupling/releasing means **4** comprise one pair of hooks **5** belonging to the base **2,** each one of which is configured in such a way that it cooperates with a corresponding coupling element **6** belonging to the baby car seat **3.**

Preferably but not necessarily, each coupling element **6** is constituted by a rod iron which passes through the baby car seat **3** crosswise, according to a direction that is orthogonal to the direction of alignment **X1** of the pair of hooks **5.**

It should be noted that manoeuvring means indicated as a whole by **7** are provided, which can be operated by the user and are suited to connect/ disconnect each one of said hooks **5** to/from a corresponding coupling element **6** in order to couple/separate the baby car seat **3** with/from the base **2.**

Safety means **8** are also provided, which are suited to prevent the unintentional disconnection of the hooks **5** from the coupling elements **6** and the separation of the seat **3** from the base **2.**

According to the invention, the manoeuvring means **7** comprise a fixed longitudinal member **9,** a sliding longitudinal member **10** associated with the fixed longitudinal member **9** and a release rod **11** suited to release the hooks **5** from the corresponding coupling elements **6.**

The fixed longitudinal member **9** is fixed to the base **2** and it is revolvingly and elastically associated with the hooks **5** and with the sliding longitudinal member **10,** the latter being configured so as to mechanically cooperate with the hooks **5** in order to open/close them with respect to the coupling elements **6.**

Finally, the release rod **11** is slidingly interposed between the fixed longitudinal member **9** and the sliding longitudinal member **10** and is provided with a grip **12** suited to be used by a user to manoeuvre said release rod in order to intentionally open the hooks **5.**

The safety means **8** are associated with the sliding longitudinal member **10** and are suited to be included between the counteracting means **13** belonging to the release rod **11** and engagement means **14** belonging to the fixed longitudinal member **9** in order to prevent the mutual movement of the release rod **11** and the sliding longitudinal member **10** and prevent the unintentional separation of the hooks **5** from the coupling elements **6** once the hooks **5** have been connected with the corresponding coupling elements **6.**

Regarding the safety means **8,** it can be observed that they comprise a shaped rod **81** whose body is revolvingly associated with the sliding longitudinal member **10** through a rotation pin **82.**

Externally, around the rotation pin **82,** there is a spring **82'** which is suited to make the rotation of the shaped rod **81** elastic, wherein the latter comprises:
- a first lateral arm **83** provided with engagement counter means **16** suited to cooperate with the engagement means **14** of the fixed longitudinal member **9;**
- a second lateral arm **84,** arranged substantially according to the same direction as the first lateral arm **83** and provided with counteracting means **15** suited to cooperate with the counteracting means **13** belonging to the release rod **11.**

Between the first lateral arm **83** and the second lateral arm **84** there is a centre arm **85,** substantially orthogonal to both of said lateral arms, which is suited to cooperate with auxiliary release means which are indicated as a whole by **30** and belong to the baby car seat **3,** so as to allow the intentional opening of the hooks **5** with respect to the coupling elements **6.**

In particular, the auxiliary release means **30** comprise: a manoeuvring lever **31** hinged to the baby car seat **3** and suited to be operated by the user; an operating lever **32** which cooperates with the centre arm **85** of the shaped rod **81** of the safety means **8** and a tie rod **33** which connects the manoeuvring lever **31** and the operating lever **32** with each other.

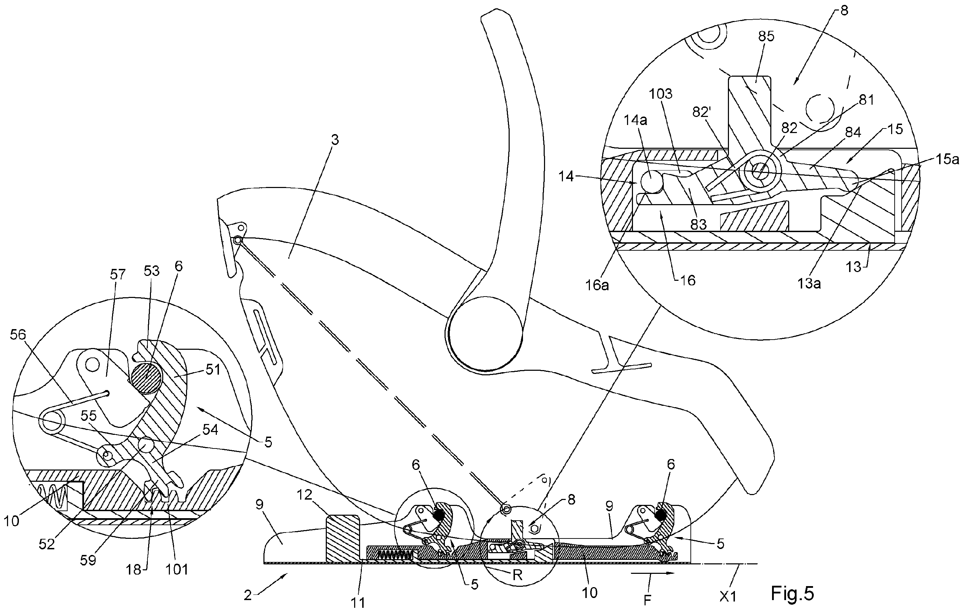

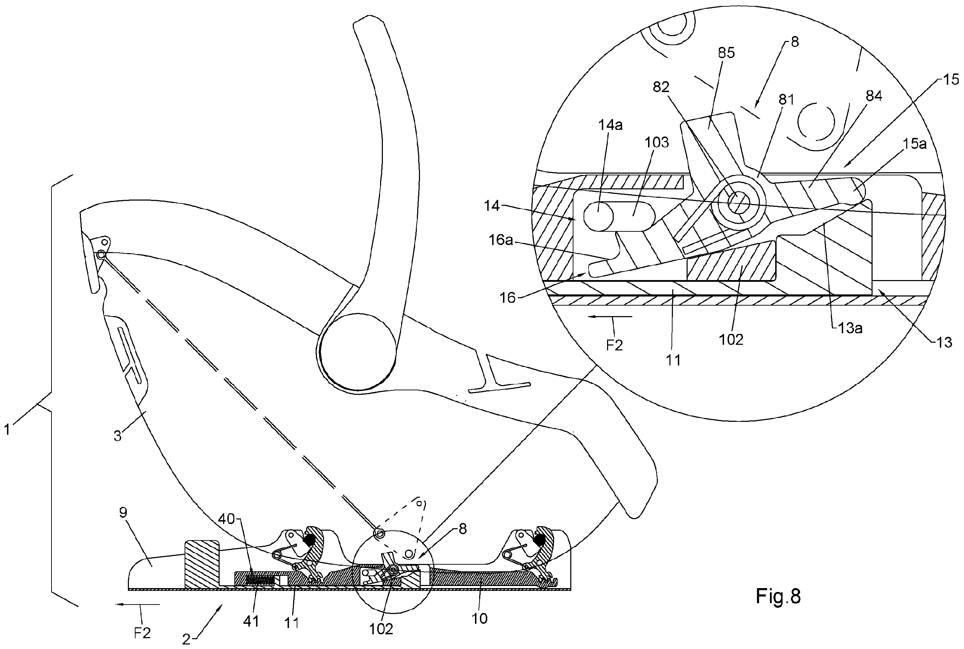

In particular, it can be observed that the safety means **8,** and in particular the shaped rod **81** which is their main element, are configured so that they can assume two distinct positions, that is:
- a first position shown in Figure 5, suited to lock the sliding longitudinal member **10** and to prevent the unintentional opening of the hooks **5** once they have been connected with the coupling elements **6,** when the engagement counter means **16** receive the engagement means **14** and the counteracting means **15** are spaced from the counteracting means **13;**
- a second position shown in Figure 8, suited to allow the sliding movement of the sliding longitudinal member **10** and to allow the intentional opening of the hooks **5** due to the sliding of the release rod **11** when the engagement counter means **16** are released from the engagement means **14** and the counteracting means **15** act against the counteracting means **13** and move the sliding longitudinal member **10.**

Regarding the hooks **5,** as shown in the figures, each one of them comprises a shaped body **51** which is revolvingly coupled with the fixed longitudinal member **9** through a rotation pin **52.**

The shaped body **51,** in particular, comprises a first hook-shaped end **53** configured so that it can be coupled with a corresponding coupling element **6** and a second end **54** which is configured to cooperate with the sliding longitudinal member **10** through toothed means **18.**

Furthermore, there is a third end **55** which through the interposition of a spring-shaped body **56** is connected to an engagement rod **57** hinged to the fixed longitudinal member **9** and suited to be elastically placed in contact with the first hook-shaped end **53** of the shaped body **51** due to the thrusting action exerted against it by the spring-shaped body **56.**

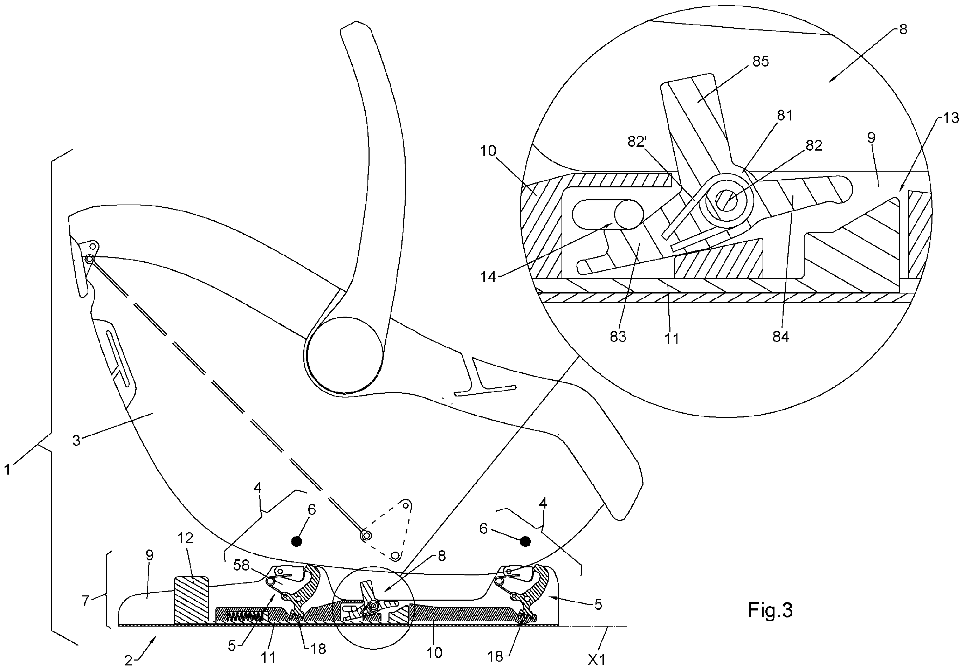

In this way, when said hook **5** is in its normal condition, meaning when it is not coupled with the corresponding coupling element **6,** it assumes a closed outline **58** that can be observed in Figure 3.

Regarding the toothed means **18** that produce the mutual movement of the shaped body **51** of each hook **5** and of the sliding longitudinal member **10,** it can be observed that they comprise a toothed sector **59** belonging to the second end **54** of the shaped body **51,** which meshes with a toothed portion **101** belonging to the sliding longitudinal member **10.**

Regarding the engagement counter means **16,** it can be observed that they are constituted by a shaped portion **16a** created in the first lateral arm **83** of the shaped rod **81,** which is suited to accommodate the engagement means **14** constituted by a pin **14a** which is tightened to the fixed longitudinal member **9,** the latter being in turn slidingly inserted in a through slot **103** provided in the sliding longitudinal member **10.**

Regarding, on the other hand, the counteracting means **15,** it can be observed that they are constituted by a shaped end **15a** of the second lateral arm **84** of the shaped rod **81** making up the safety means **8,** which is suited to cooperate with the counteracting means **13** constituted by a core with inclined plane **13a** provided in the release rod **11.**

Furthermore, the sliding longitudinal member **10** is provided with a stop element **102** configured to act against the counteracting means **13** during the movement of the release rod **11** with respect to the sliding longitudinal member **10.**

Furthermore, it can be observed that between the release rod **11** and the sliding longitudinal member **10** there is a housing **40** provided with a spring **41** intended to make the mutual movement of the sliding longitudinal member **10** and of the release rod **11** elastic.

Finally, it can be observed, in particular in Figures 1, 2 and 4, that the fixed longitudinal member **9** is provided with a shaped pocket **91** which is arranged at the level of each one of said hooks **5** and is suited to accommodate a corresponding coupling element **6** when this is fitted in the corresponding hook **5.**

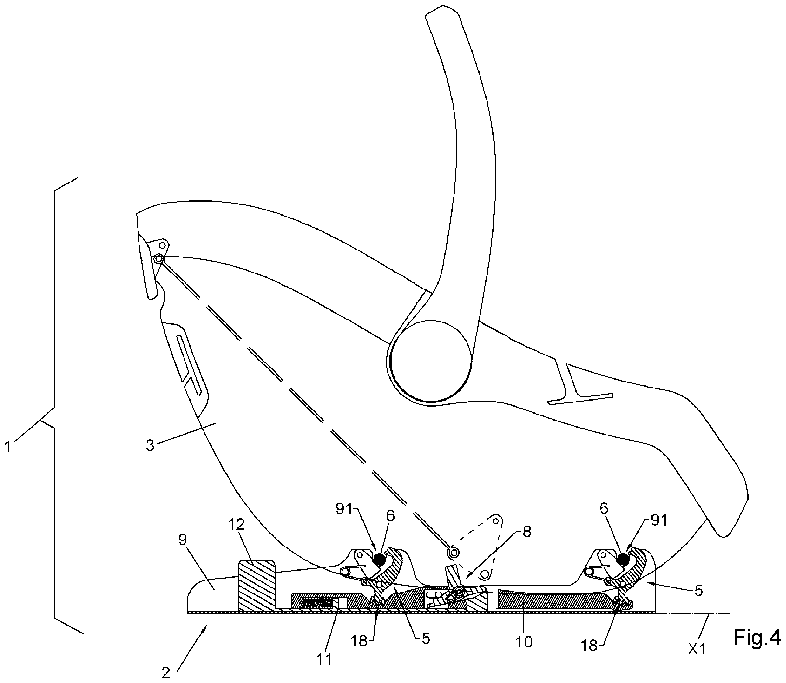

In practice, when, starting from the condition illustrated in Figure 3, the baby car seat **3** is moved near the base **2** and the coupling elements **6** are pushed in such a way as to fit them in the hooks **5** as shown in Figure 4, they move the engagement rod **57** downwards and this, pushed by the spring-shaped body **56,** counteracts the third end **55** of the shaped body **51** of each hook **5** and makes the shaped body **51** itself rotate around the rotation pin **52** until when the hook-shaped end **53** of the shaped body **51** is connected with the coupling element **6** as shown in Figure 5.

Both hooks **5** are aligned with each other along the longitudinal direction **X1** and are connected to the sliding longitudinal member **10** through the toothed means **18** which, as already explained, comprise the toothed sector **59** belonging to the shaped body **51** of each hook **5** and a toothed portion **101** belonging to the sliding longitudinal member **10** and meshing with the toothed sector **59.**

In this way, a rigid kinematic connection is obtained between the hooks **5** and the rotation of the hooks **5** under the thrusting action of the engagement rods **57** produced by the spring-shaped bodies **56** results in the movement of the sliding longitudinal member **10** and thus in the synchronous rotation of both hooks **5** aligned along the direction **X1,** as can be observed, in fact, in Figure 5.

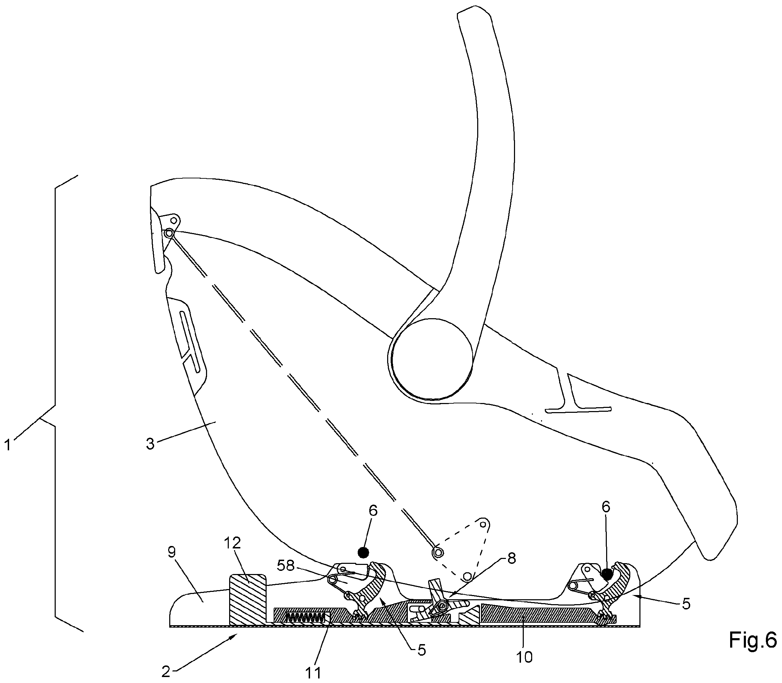

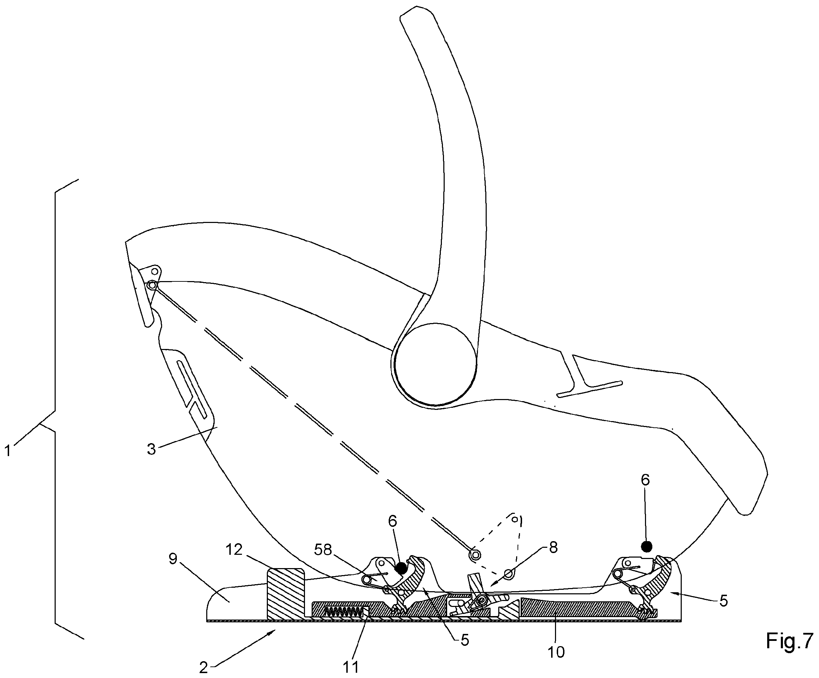

The fact that the toothed means **18** make both hooks **5** perform a synchronous rotary movement resulting from the simultaneous movement of the sliding longitudinal member **10** means that if only one of the coupling elements **6** is housed in the corresponding hook **5,** as can be observed in the examples shown in Figure 6 and Figure 7, the engagement rod **57** of the hook **5** which is not crossed by the coupling element **6** maintains the respective hook **5** open, as the shaped body **51** is not rotated due to the fact that the engagement rod **57** does not act against it.

Since, as already explained, the two hooks **5** are rigidly and kinematically connected by means of the sliding longitudinal member **10,** the hook **5** crossed by the coupling element **6** does not close, either.

In this way, differently from what happens in the transporting devices of the known art, the baby car seat **3** cannot be coupled incorrectly with the base **2** and therefore the device **1** of the invention achieves one of the set objects.

In other words, in the device of the invention the baby car seat **3** is coupled with the base **2** only on condition that both the coupling elements **6** are inserted in the respective hooks **5** in the configuration shown in Figure 4. Advantageously, it would thus be possible to connect the sliding longitudinal member **10** to a visual or acoustic indicator or another type of indicator that highlights its movement so as to signal that the baby car seat **3** has been correctly coupled with the base **2.**

The device **1** of the invention, as already explained, is provided with safety means **8** which, as shown in Figures 3 and 4, are constituted by the shaped rod **81** cooperating with the spring **82'** which is externally coupled with the rotation pin **82** and whose thrusting action maintains the shaped rod **81** normally raised and in contact with the pin **14a** belonging to the fixed longitudinal member **9** and making up the above mentioned engagement means **14.**

During the movement of the sliding longitudinal member **10** in the direction indicated by the arrow **F** in Figure 5, which allows the baby car seat **3** to be coupled with the base **2,** the sliding longitudinal member **10** moves in the same direction also the shaped rod **81** which is integral with it, since this is revolvingly fixed to the rotation pin **82** which belongs to the sliding longitudinal member **10.**

When the shaped rod **81** is in the configuration illustrated in Figure 5, the thrusting action of the spring **82'** causes it to rotate in the clockwise direction indicated by the arrow **R** in Figure 5, so that the shaped portion **16a** of the shaped rod **81** houses the pin **14a.**

In this configuration, the shaped rod **81** behaves like a strut that prevents the movement of the sliding longitudinal member **10** and thus serves as a safety element against any unintentional opening of the hooks **5.**

Furthermore, the presence of this shaped rod **81** that behaves like a strut gives the hooks **5** higher capacity to oppose any opening forces resulting from accidental stress caused, for example, by impacts due to accidents.

In order to release the baby car seat **3** from the base **2,** the user acts on the grip **12** of the release rod **11** and moves it in the direction indicated by the arrow **F2** in Figure 8 until the shaped rod **81** is released from the pin **14a.**

This takes place in two successive moments illustrated in Figure 8, in which it is possible to observe the following:
- initially, the movement of the release rod **11** moves the core with inclined plane **13a** against the shaped end **15a** of the second lateral arm **84** of the shaped rod **81** and the latter is thus set rotating around the pin **82** until the pin **14a** is released;
- successively, as the movement in the direction indicated by the arrow **F2** continues, the release rod **11** comes into contact with the stop element **102** of the sliding longitudinal member **10** which in turn is moved in the same direction indicated by the arrow **F2** until opening the hooks **5** as a result of the rotary movement which it transmits to the shaped body **51** of each hook **5** through the toothed means **18.**

In this way, the safety means **8** and in particular the shaped rod **81** intervene actively in the operation performed to release the baby car seat **3,** thus achieving another object of the invention.

At this point, the coupling elements **6** are free and the baby car seat **3** can be separated from the base **2.**

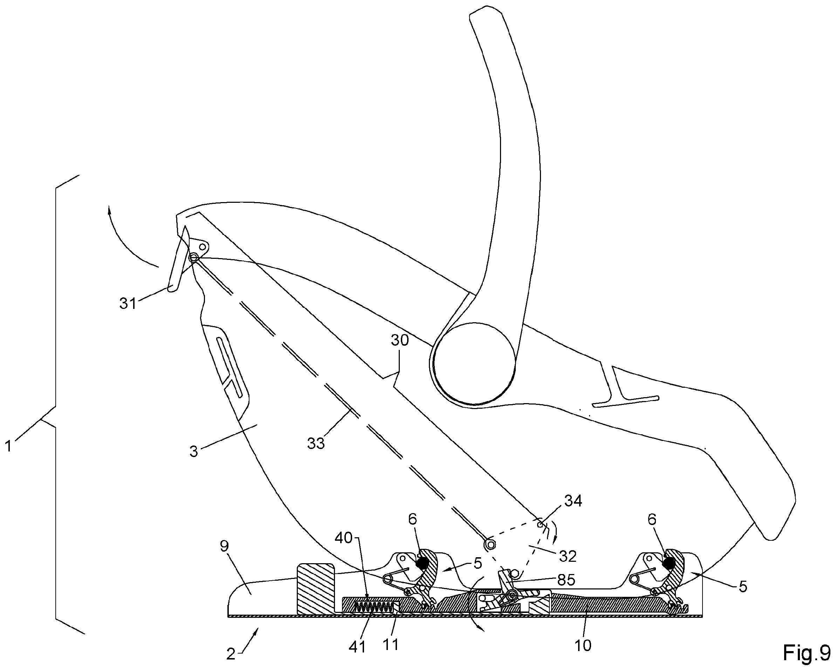

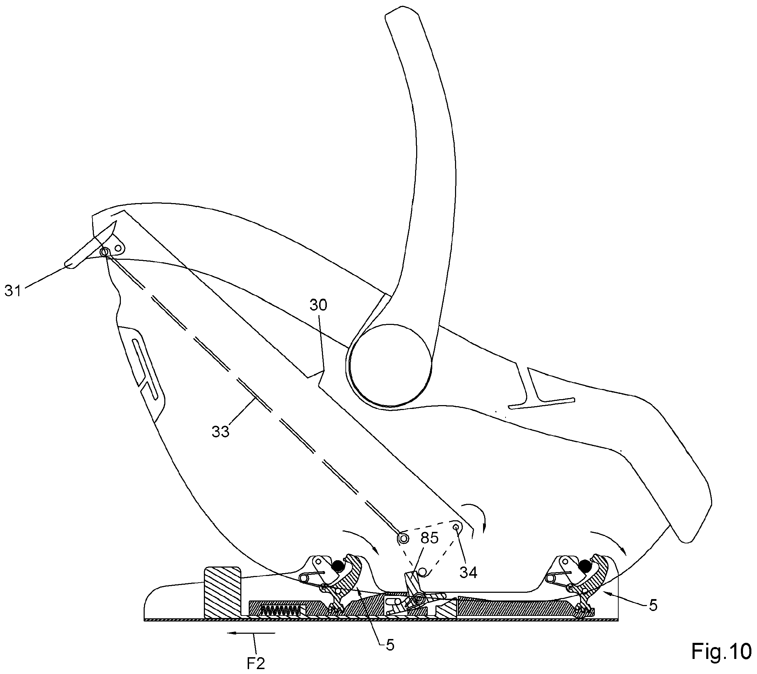

Auxiliary release means are also provided, which are indicated as a whole by **30** and are visible in Figures 9 and 10.

Raising the manoeuvring lever **31** as shown in Figure 9 and continuing to raise it as shown in Figure 10 tensions the tie rod **33** and sets the operating lever **32** rotating around the pin **34.**

The opening of the hooks **5** takes place according to the same sequence just described above, as the opposition between the operating lever **32** and the centre arm **85** of the shaped rod **81** causes first the release of the shaped rod **81** from the pin **14a,** as shown in Figure 9, and successively the movement of the sliding longitudinal member **10** with the successive opening of the hooks **5,** as shown in Figure 10.

According to the above, it can be understood that the transporting device that is the subject of the invention achieves all the set objects.

First of all, the invention achieves the object to provide a transporting device which offers increased safety against any unintentional opening of the hooks compared to the equivalent devices known in the art.

Furthermore, the invention achieves the object to avoid the risk of the baby car seat being incorrectly coupled with the base.

Finally, the configuration of the safety means that intervene actively during the operations performed to release the baby car seat from the base achieves another object of the invention.

The transporting device that is the subject of the invention can be subjected to modifications which are neither described nor illustrated herein but which must be considered protected by this patent, provided that they fall within the scope of the following claims.

## Claims

1. Device (1) for transporting babies in cars, comprising a base (2) suited to be fixed to a car seat and to support a baby car seat (3), said device (1) comprising:
- means (4) for coupling/releasing said baby car seat (3) with/from said base (2), said coupling/releasing means (4) comprising at least one pair of hooks (5) belonging to said base (2), each one of said hooks being configured to cooperate with a corresponding coupling element (6) belonging to said baby car seat (3);
- manoeuvring means (7) suited to be operated by the user and to connect/ release each one of said hooks (5) with/from the corresponding coupling element (6) in order to connect/separate said baby car seat (3) with/from said base (2);
- safety means (8) suited to prevent any unintentional disconnection of said hooks (5) from said coupling elements (6) and the separation of said baby car seat (3) from said base (2),
**characterized in that** said manoeuvring means (7) comprise:
- a fixed longitudinal member (9) belonging to said base (2) and revolvingly and elastically associated with said hooks (5);
- a sliding longitudinal member (10) associated with said fixed longitudinal member (9) and configured to mechanically cooperate with said hooks (5) in order to open/close them with respect to said coupling elements (6);
- a release rod (11) suited to release said hooks (5) from the corresponding coupling elements (6), said release rod (11) being slidingly interposed between said fixed longitudinal member (9) and said sliding longitudinal member (10) and being provided with a grip (12) suited to be used to manoeuvre said release rod in order to intentionally open said hooks (5), said safety means (8) being associated with said sliding longitudinal member (10) and being suited to be included between counteracting means (13) belonging to said release rod (11) and engagement means (14) belonging to said fixed longitudinal member (9), in order to prevent the mutual movement of said release rod (11) and said sliding longitudinal member (10) and to avoid any unintentional separation of said hooks (5) from said coupling elements (6) once said hooks (5) have been connected with said coupling elements (6).

2. Device (1) according to claim 1, **characterized in that** said safety means (8) comprise a shaped rod (81) whose body is revolvingly associated with said sliding longitudinal member (10) through a rotation pin (82) and cooperates with a spring (82') suited to make the rotation of said shaped rod (81) around said rotation pin (82) elastic, said shaped rod (81) comprising the following:
- a first lateral arm (83) provided with engagement counter means (16) suited to cooperate with said engagement means (14) of said fixed longitudinal member (9);
- a second lateral arm (84) provided with counteracting means (15) suited to cooperate with said counteracting means (13) of said release rod (11).

3. Device (1) according to claim 2, **characterized in that** said shaped rod (81) comprises also a centre arm (85) included between said lateral arms (83, 84) and suited to cooperate with auxiliary release means (30) belonging to said baby car seat (3) for the intentional opening of said hooks (5) with respect to said coupling elements (6), said auxiliary release means (30) comprising:
- a manoeuvring lever (31) associated with said baby car seat (3) and suited to be operated by the user;
- an operating lever (32) configured to cooperate with said centre arm (85) of said shaped rod (81) of said safety means (8);
- at least one tie rod (33) connecting said manoeuvring lever (31) and said operating lever (32) together.

4. Device (1) according to claim 2 or 3, **characterized in that** said shaped rod (81) is configured so that it assumes:
- a first position suited to lock said sliding longitudinal member (10) and to prevent any unintentional opening of said hooks (5) once they have been connected with said coupling elements (6), when said engagement counter means (16) receive said engagement means (14) and said counteracting means (15) are spaced from said counteracting means (13);
- a second position suited to allow the sliding movement of said sliding longitudinal member (10) and to allow the intentional opening of said hooks (5) due to the sliding of said release rod (11), when said engagement counter means (16) are released from said engagement means (14) and said counteracting means (15) act against said counteracting means (13).

5. Device (1) according to any of the preceding claims, **characterized in that** each one of said hooks (5) comprises a shaped body (51) revolvingly associated with said fixed longitudinal member (9) through a rotation pin (52), said shaped body (51) comprising:
- a first hook-shaped end (53) configured so that it can be coupled with a corresponding coupling element (6);
- a second end (54) configured to cooperate with said sliding longitudinal member (10) through toothed means (18);
- a third end (55) which, through the interposition of a spring-shaped body (56), is connected to an engagement rod (57) hinged to said fixed longitudinal member (9) and is suited to be normally placed in contact with said first hook-shaped end (53) of said shaped body (51) due to the thrusting action exerted by said spring-shaped body (56) in such a way as to define a closed outline (58) for said hook (5), when it is not coupled with said corresponding coupling element (6).

6. Device (1) according to claim 5, **characterized in that** said toothed means (18) comprise a toothed sector (59) belonging to said shaped body (51) and meshing with a toothed portion (101) of said sliding longitudinal member (10).

7. Device (1) according to any of the claims from 2 to 4, **characterized in that:**
- said engagement counter means (16) are constituted by a shaped portion (16a) created in said first lateral arm (83) of said shaped rod (81) and suited to accommodate said engagement means (14) which are constituted by a pin (14a) provided in said fixed longitudinal member (9) and inserted in a through slot (103) provided in said sliding longitudinal member (10);
- said counteracting means (15) are constituted by the shaped end (15a) of said second lateral arm (84), which is suited to cooperate with said counteracting means (13) constituted by a core with inclined plane (13a) provided in said release rod (11).

8. Device (1) according to claim 4 or 7, **characterized in that** it comprises a stop element (102) belonging to said sliding longitudinal member (10) and configured to counteract said counteracting means (13) during the movement of said release rod (11) with respect to said sliding longitudinal member (10).

9. Device (1) according to any of the preceding claims, **characterized in that** between said release rod (11) and said sliding longitudinal member (10) there is a housing (40) which is provided with a spring (41) suited to make the mutual movement of said sliding longitudinal member (10) and of said release rod (11) elastic.

10. Device (1) according to any of the preceding claims, **characterized in that** said fixed longitudinal member (9) is provided with a shaped pocket (91) arranged at the level of each one of said hooks (5) and suited to accommodate a corresponding coupling element (6) when said coupling element (6) is housed in the corresponding hook (5).

## Patentansprüche

1. Vorrichtung (1) zum Transportieren von Babys in Autos, umfassend eine Basis (2), die zur Befestigung an einem Autositz und zur Unterstützung eines Babyautositzes (3) geeignet ist, wobei die Vorrichtung (1) Folgendes umfasst:
- Mittel (4) zur Kopplung/Freigabe des Babyautositzes (3) mit/von der Basis (2), wobei die Kopplungs-/Freigabemittel (4) mindestens ein Paar Haken (5) umfassen, die zur Basis (2) gehören und jeder dieser Haken dazu konfiguriert ist, mit einem entsprechenden Kopplungselement (6) zusammenzuarbeiten, das zu dem Babyautositz (3) gehört;
- Betätigungsmittel (7), die geeignet sind, vom Benutzer bedient zu werden und jeden der Haken (5) mit/von dem entsprechenden Kopplungselement (6) zu verbinden/freizugeben, um den Babyautositz (3) mit/von der Basis (2) zu verbinden/lösen;
- Sicherheitsmittel (8), die geeignet sind, ein unbeabsichtigtes Trennen der Haken (5) von den Kopplungselementen (6) und das Lösen des Babyautositzes (3) von der Basis (2) zu verhindern,
**dadurch gekennzeichnet, dass** die Betätigungsmittel (7) Folgendes umfassen:
- ein festes Längselement (9), das zu der Basis (2) gehört und den Haken (5) drehbar sowie elastisch zugeordnet ist;
- ein gleitendes Längselement (10), das dem festen Längselement (9) zugeordnet ist und konfiguriert ist, mechanisch mit den Haken (5) zusammenzuarbeiten, um diese in Bezug auf die Kopplungselemente (6) zu öffnen/schließen;
- eine Freigabestange (11), die zur Freigabe der Haken (5) von den entsprechenden Kopplungselementen (6) geeignet ist, wobei die Freigabestange (11) zwischen dem festen Längselement (9) und dem gleitenden Längselement (10) gleitend angeordnet ist und mit einem Griff (12) versehen ist, der zur Betätigung der Freigabestange geeignet ist, um die Haken (5) absichtlich zu öffnen; die Sicherheitsmittel (8) dem gleitenden Längselement (10) zugeordnet sind und dazu geeignet sind zwischen Gegenmitteln (13), die zur Freigabestange (11) gehören, und Eingriffsmitteln (14), die zum festen Längselement (9) gehören, eingeschlossen zu werden, um die gegenseitige Bewegung der Freigabestange (11) und des gleitenden Längselements (10) zu verhindern und ein unbeabsichtigtes Trennen der Haken (5) von den Kopplungselementen (6) zu vermeiden, sobald die Haken (5) mit den Kopplungselementen (6) verbunden sind.

2. Vorrichtung (1) nach Anspruch 1, **dadurch gekennzeichnet, dass** die Sicherheitsmittel (8) eine Formstange (81) umfassen, dessen Körper dem gleitenden Längselement (10) durch einen Drehstift (82) drehbar zugeordnet ist und mit einer Feder zusammenarbeitet (82'), die geeignet ist, die Drehung der Formstange (81) um den Drehstift (82) elastisch zu gestalten, wobei die Formstange (81) Folgendes umfasst:
- einen ersten seitlichen Arm (83), der mit Eingriffsgegenmitteln (16) versehen ist, die zum Zusammenarbeiten mit den Eingriffsmitteln (14) des festen Längsträgers (9) geeignet sind;
- einen zweiten seitlichen Arm (84), der mit Gegenmitteln (15) versehen ist, die zum Zusammenarbeiten mit den Gegenmitteln (13) der Freigabestange (11) geeignet sind.

3. Vorrichtung (1) nach Anspruch 2, **dadurch gekennzeichnet, dass** die Formstange (81) auch einen Mittelarm (85) umfasst, der zwischen den Seitenarmen (83, 84) eingeschlossen ist und geeignet ist mit zum Babyautositz (3) gehörenden Hilfsfreigabemitteln (30) zusammenzuarbeiten, um die Haken (5) in Bezug auf die Kopplungselemente (6) absichtlich zu öffnen, wobei die Hilfsfreigabemittel (30) Folgendes umfassen:
- einen Betätigungshebel (31), der dem Babyautositz (3) zugeordnet ist und für die Bedienung durch den Benutzer geeignet ist;
- einen Bedienungshebel (32), der konfiguriert ist, mit dem Mittelarm (85) der Formstange (81) der Sicherheitsmittel (8) zusammenzuarbeiten;
- mindestens eine Spurstange (33), die den Betätigungshebel (31) und den Bedienungshebel (32) miteinander verbindet.

4. Vorrichtung (1) nach Anspruch 2 oder 3, **dadurch gekennzeichnet, dass** die Formstange (81) so konfiguriert ist, dass sie folgende Positionen einnimmt:
- eine erste Position, die geeignet ist, das gleitende Längselement (10) zu verriegeln und ein unbeabsichtigtes Öffnen der Haken zu verhindern (5), sobald sie mit den Kopplungselementen (6) verbunden sind, wenn die Eingriffsgegenmittel (16) die Eingriffsmittel (14) aufnehmen und die Gegenmittel (15) von den Gegenmitteln (13) beabstandet sind;
- eine zweite Position, die geeignet ist, die Gleitbewegung des gleitenden Längselements (10) zu ermöglichen und das absichtliche Öffnen der Haken (5) aufgrund des Gleitens der Freigabestange (11) zu ermöglichen, wenn die Eingriffsgegenmitteln (16) von den Eingriffsmitteln (14) freigegeben werden und die Gegenmittel (15) gegen die Gegenmittel (13) wirken.

5. Vorrichtung (1) nach irgendeinem der vorgehenden Ansprüche, **dadurch gekennzeichnet, dass** jeder der Haken (5) einen Formkörper (51) umfasst, der dem festen Längselement (9) durch einen Drehstift (52) drehbar zugeordnet ist, wobei der Körper (51) Folgendes umfasst:
- ein erstes hakenförmiges Ende (53), das so konfiguriert ist, dass es mit einem entsprechenden Kopplungselement (6) gekoppelt werden kann;
- ein zweites Ende (54), das konfiguriert ist, mit dem gleitenden Längselement (10) durch gezahnte Mittel (18) zusammenzuarbeiten;
- ein drittes Ende (55), das durch Zwischenschaltung eines federförmigen Körpers (56) mit einer Eingriffsstange (57) verbunden ist, die an dem festen Längselement (9) angelenkt und dazu geeignet ist, aufgrund der von dem federförmigen Körper (56) ausgeübten Schubwirkung, normalerweise mit dem ersten hakenförmigen Ende (53) des Formkörpers (51) derart in Kontakt gebracht zu werden, dass ein geschlossener Umriss (58) für den Haken (5) definiert wird, wenn dieser nicht mit dem entsprechenden Kopplungselement (6) gekoppelt ist.

6. Vorrichtung (1) nach Anspruch 5, **dadurch gekennzeichnet, dass** die Zahnmittel (18) einen zum Formkörper (51) gehörenden und mit einem gezahnten Abschnitt (101) des gleitenden Längselements (10) in Eingriff stehenden gezahnten Sektor (59) umfassen.

7. Vorrichtung (1) nach einem der Ansprüche von 2 bis 4, **dadurch gekennzeichnet, dass:**
- die Eingriffsgegenmittel (16) aus einem Formabschnitt (16a) bestehen, der in dem ersten seitlichen Arm (83) der Formstange (81) ausgebildet ist und zur Aufnahme der Eingriffsmittel (14) geeignet ist, die aus einem Stift (14a) bestehen, der in dem festen Längselement (9) vorgesehen und in einen Durchgangsschlitz (103) eingesetzt ist, der in dem gleitenden Längselement (10) vorgesehen ist;
- die Gegenmittel (15) aus dem geformten Ende (15a) des zweiten Seitenarms (84) bestehen, der geeignet ist, mit den Gegenmitteln (13) zusammenzuarbeiten, die aus einem in der Entriegelungsstange (11) vorgesehenen Kern mit einer schiefen Ebene (13a) bestehen.

8. Vorrichtung (1) nach Anspruch 4 oder 7, **dadurch gekennzeichnet, dass** sie ein Stoppelement (102) umfasst, das zu dem gleitenden Längselement (10) gehört und dazu konfiguriert ist, den Gegenmitteln (13) während der Bewegung der Freigabestange (11) in Bezug auf das gleitende Längselement (10) entgegenzuwirken.

9. Vorrichtung (1) nach irgendeinem der vorgehenden Ansprüche, **dadurch gekennzeichnet, dass** zwischen der Freigabestange (11) und dem gleitenden Längselement (10) ein Gehäuse (40) vorhanden ist, das mit einer Feder (41) versehen ist, die dazu geeignet ist, die gegenseitige Bewegung des gleitenden Längselements (10) und der Freigabestange (11) elastisch zu gestalten.

10. Vorrichtung (1) nach irgendeinem der vorgehenden Ansprüche, **dadurch gekennzeichnet, dass** das feste Längselement (9) mit einer Formtasche (91) versehen ist, die auf der Höhe jedes der Haken (5) angeordnet ist und zur Aufnahme eines entsprechenden Kopplungselements (6) geeignet ist, wenn das Kopplungselement (6) in dem entsprechenden Haken (5) aufgenommen ist.

## Revendications

1. Dispositif (1) pour transporter de bébés dans des voitures, comprenant une base (2) appropriée pour être fixée à un siège auto et porter un siège auto pour bébé (3), ledit dispositif (1) comprenant:
- des moyens (4) pour accoupler/désolidariser ledit siège auto pour bébé (3) avec/à partir de ladite base (2), lesdits moyens (4) d'accouplement/ de désolidarisation comprenant au moins une paire de crochets (5) appartenant à ladite base (2), chacun desdits crochets étant configuré pour coopérer avec un élément d'accouplement correspondant (6) appartenant audit siège auto pour bébé (3);
- des moyens de manœuvre (7) appropriés pour être actionnés par l'utilisateur et pour raccorder/libérer chacun desdits crochets (5) avec/ à partir de l'élément d'accouplement correspondant (6) afin de raccorder/séparer ledit siège auto pour bébé (3) avec/à partir de ladite base (2);
- des moyens de sécurité (8) appropriés pour empêcher toute désolidarisation accidentelle desdits crochets (5) à partir desdits éléments d'accouplement (6) et la séparation dudit siège auto pour bébé (3) à partir de ladite base (2),
**caractérisé en ce que** lesdits moyens de manœuvre (7) comprennent:
- un élément longitudinal fixe (9) appartenant à ladite base (2) et associé de manière rotative et élastique avec lesdits crochets (5);
- un élément longitudinal coulissant (10) associé avec ledit élément longitudinal fixe (9) et configuré pour coopérer mécaniquement avec lesdits crochets (5) afin de les ouvrir/fermer par rapport auxdits éléments d'accouplement (6);
- une tige de libération (11) appropriée pour libérer les crochets (5) des éléments d'accouplement correspondants (6), ladite tige de libération (11) étant interposée de manière coulissante entre ledit élément longitudinal fixe (9) et ledit élément longitudinal coulissant (10) et étant munie d'une poignée (12) appropriée pour être utilisée pour manœuvrer ladite tige de libération afin d'ouvrir intentionnellement lesdits crochets (5), lesdits moyens de sécurité (8) étant associés avec ledit élément longitudinal coulissant (10) et étant appropriés pour être inclus entre des moyens de compensation (13) appartenant à ladite tige de libération (11) et des moyens de mise en prise (14) appartenant audit élément longitudinal fixe (9), afin d'empêcher le mouvement mutuel de ladite tige de libération (11) et dudit élément longitudinal coulissant (10) et d'éviter toute séparation non intentionnelle desdits crochets (5) à partir desdits éléments d'accouplement (6) une fois que lesdits crochets (5) ont été raccordés avec lesdits éléments d'accouplement (6).

2. Dispositif (1) selon la revendication 1, **caractérisé en ce que** lesdits moyens de sécurité (8) comprennent une tige profilée (81) dont le corps est associé de manière rotative avec ledit élément longitudinal coulissant (10) au travers d'une broche de rotation (82) et coopère avec un ressort (82') approprié pour rendre élastique la rotation de ladite tige profilée (81) autour de ladite broche de rotation (82), ladite tige profilée (81) comprenant ce qui suit:
- un premier bras latéral (83) muni de moyens de contre-mise en prise (16) appropriés pour coopérer avec lesdits moyens de mise en prise (14) dudit élément longitudinal fixe (9);
- un second bras latéral (84) muni de moyens de compensation (15) appropriés pour coopérer avec lesdits moyens de compensation (13) de ladite tige de libération (11).

3. Dispositif (1) selon la revendication 2, **caractérisé en ce que** ladite tige profilée (81) comprend également un bras central (85) inclus entre lesdits bras latéraux (83, 84) et approprié pour coopérer avec des moyens de libération auxiliaires (30) appartenant audit siège auto pour bébé (3) pour l'ouverture intentionnelle desdits crochets (5) par rapport auxdits éléments d'accouplement (6), lesdits moyens de libération auxiliaire (30) comprenant:
- un levier de manœuvre (31) associé avec ledit siège auto pour bébé (3) et approprié pour être actionné par l'utilisateur;
- un levier d'actionnement (32) configuré pour coopérer avec ledit bras central (85) de ladite tige profilée (81) desdits moyens de sécurité (8);
- au moins un tirant (33) raccordant ensemble ledit levier de manœuvre (31) et ledit levier d'actionnement (32).

4. Dispositif (1) selon la revendication 2 ou 3, **caractérisé en ce que** ladite tige profilée (81) est configurée de sorte qu'elle adopte:
- une première position appropriée pour verrouiller ledit élément longitudinal coulissant (10) et pour empêcher toute ouverture non intentionnelle desdits crochets (5) une fois qu'ils ont été raccordés avec lesdits éléments d'accouplement (6), lorsque lesdits moyens de contre-mise en prise (16) reçoivent lesdits moyens de mise en prise (14) et lesdits moyens de compensation (15) sont espacés desdits moyens de compensation (13);
- une seconde position appropriée pour permettre le mouvement coulissant dudit élément longitudinal coulissant (10) et pour permettre l'ouverture intentionnelle desdits crochets (5) en raison du coulissement de ladite tige de libération (11), lorsque lesdits moyens de contre-mise en prise (16) sont libérés desdits moyens de mise en prise (14) et lesdits moyens de compensation (15) agissent à l'encontre desdits moyens de compensation (13).

5. Dispositif (1) selon l'une quelconque des revendications précédentes, **caractérisé en ce que** chacun desdits crochets (5) comprend un corps profilé (51) associé de manière rotative avec ledit élément longitudinal fixe (9) au travers d'une broche de rotation (52), ledit corps profilé (51) comprenant:
- une première extrémité en forme de crochet (53) configurée de sorte qu'elle peut être accouplée avec un élément d'accouplement correspondant (6);
- une deuxième extrémité (54) configurée pour coopérer avec ledit élément longitudinal coulissant (10) au travers de moyens dentés (18);
- une troisième extrémité (55) qui, au travers de l'interposition d'un corps en forme de ressort (56), est raccordée à une tige de mise en prise (57) articulée sur ledit élément longitudinal fixe (9) et est appropriée pour être normalement placée en contact avec ladite première extrémité en forme de crochet (53) dudit corps profilé (51) en raison de l'action de poussée exercée par ledit corps en forme de ressort (56) de manière à définir un contour fermé (58) pour ledit crochet (5), lorsqu'il n'est pas accouplé avec ledit élément d'accouplement correspondant (6).

6. Dispositif (1) selon la revendication 5, **caractérisé en ce que** lesdits moyens dentés (18) comprennent un secteur denté (59) appartenant audit corps profilé (51) et s'engrenant avec une partie dentée (101) dudit élément longitudinal coulissant (10).

7. Dispositif (1) selon l'une quelconque des revendications 2 à 4, **caractérisé en ce que:**
- lesdits moyens de contre-mise en prise (16) sont constitués par une partie profilée (16a) créée dans ledit premier bras latéral (83) de ladite tige profilée (81) et appropriée pour recevoir lesdits moyens de mise en prise (14) qui sont constitués par une broche (14a) ménagée dans ledit élément longitudinal fixe (9) et insérée dans une fente traversante (103) ménagée dans ledit élément longitudinal coulissant (10);
- lesdits moyens de compensation (15) sont constitués par l'extrémité profilée (15a) dudit second bras latéral (84), qui est appropriée pour coopérer avec lesdits moyens de compensation (13) constitués par un noyau ayant un plan incliné (13a) ménagé dans ladite tige de libération (11).

8. Dispositif (1) selon la revendication 4 ou 7, **caractérisé en ce qu'**il comprend un élément de butée (102) appartenant audit élément longitudinal coulissant (10) et configuré pour compenser lesdits moyens de compensation (13) au cours du mouvement de ladite tige de libération (11) par rapport audit élément longitudinal coulissant (10).

9. Dispositif (1) selon l'une quelconque des revendications précédentes, **caractérisé en ce que,** entre ladite tige de libération (11) et ledit élément longitudinal coulissant (10), se trouve un logement (40) qui est muni d'un ressort (41) approprié pour rendre élastique le mouvement mutuel dudit élément longitudinal coulissant (10) et de ladite tige de libération (11).

10. Dispositif (1) selon l'une quelconque des revendications précédentes, **caractérisé en ce que** ledit élément longitudinal fixe (9) est muni d'une poche profilée (91) agencée au niveau de chacun desdits crochets (5) et appropriée pour accueillir un élément d'accouplement correspondant (6) lorsque ledit élément d'accouplement (6) est logé dans le crochet correspondant (5).
